# EUROPEAN PATENT SPECIFICATION

(11) **EP 2 434 675 B1**
(45) Date of publication and mention of the grant of the patent: **02.08.2017**
(21) Application number: 10791254.5
(22) Date of filing: 22.04.2010
(51) Int. Cl.: H04L 1/16, H04L 1/18

(54) **FAST RETRANSMISSION METHOD AND DEVICE IN RADIO LINK CONTROL LAYER ACKNOWLEDGED MODE**
VERFAHREN UND VORRICHTUNG FÜR SCHNELLE NEUÜBERTRAGUNG IN EINEM FUNKVERKNÜPFUNGS-STEUERSCHICHT-QUITTIERUNGSMODUS
PROCEDE DE RETRANSMISSION RAPIDE ET DISPOSITIF EN MODE D'ACCUSE DE RECEPTION DE COUCHE DE COMMANDE DE LIAISON RADIO

(30) Priority: 25.06.2009 CN 200910087927
(43) Date of publication of application: 28.03.2012
(73) Proprietor: ZTE Corporation, Shenzhen, Guangdong 518057 (CN)
(72) Inventor: WANG, Bei, Shenzhen Guangdong 518057 (CN)
(74) Representative: Manitz Finsterwald Patentanwälte PartmbB
(86) International application number: PCT/CN2010/072078
(87) International publication number: WO 2010/148748

(56) References cited:
- WO-A1-2008/094120
- WO-A1-2008/094120
- WO-A1-2008/126808
- WO-A2-2011/019427
- CN-A- 101 064 589
- US-A1- 2009 086 646
- US-A1- 2009 232 069
- RESEARCH IN MOTION UK LIMITED: "Status reporting for segmented PDUs", 3GPP DRAFT; R2-094285, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090816, 16 August 2009 (2009-08-16), XP050352529, [retrieved on 2009-08-16]

## Description

### Technical Field

The present invention relates to retransmission technique in the wireless communication field, and in particular, to a method and an apparatus for fast retransmission during the process of ARQ (Automatic Retransmission Request) retransmission in a radio link control layer protocol entity acknowledged mode.

### Background Art

A RLC (Radio Link Control) protocol layer is located below the PDCP (Packet Data Convergence Protocol) layer and above the MAC (Media Access Control) layer in a radio interface protocol stack of a LTE (Long Term Evolution) system, and is a sub-layer of Layer 2, layer 2 herein is mainly composed of sub-layers MAC, RLC, PDCP, etc. The RLC sub-layer provides segmenting and retransmission services for service data and control data of the user. Functions of the RLC sub-layer includes link control, delivering PDUs (Protocol Data Unit) of the upper layer, i.e., RRC (Radio Resource Control)/PDCP, reassembling, segmenting, re-segmenting and concatenating, delivering PDUs to the upper layer in order, ARQ error correction, duplicate detection, flow control, protocol error detection and repair, RLC reestablishment, etc.

The functions of the RLC sub-layer are implemented by RLC entities, each of which may be configured to have three modes by the RRC so as to execute data transmission: TM (Transparent Mode), UM (Unacknowledged Mode) and AM (Acknowledged Mode).

ARQ retransmission in AM is achieved as follows: a receiving end sends a status report to a sending end, the sending end judges which PDUs have been received by the receiving end with acknowledgement and which PDUs or segments of PDUs need to be retransmitted according to ACK_SN, NACK information in the status report, thereby ensuring reliability of data transmission. Herein, NACK involved in the present invention refers to an unacknowledged response, and ACK refers to an acknowledged response.

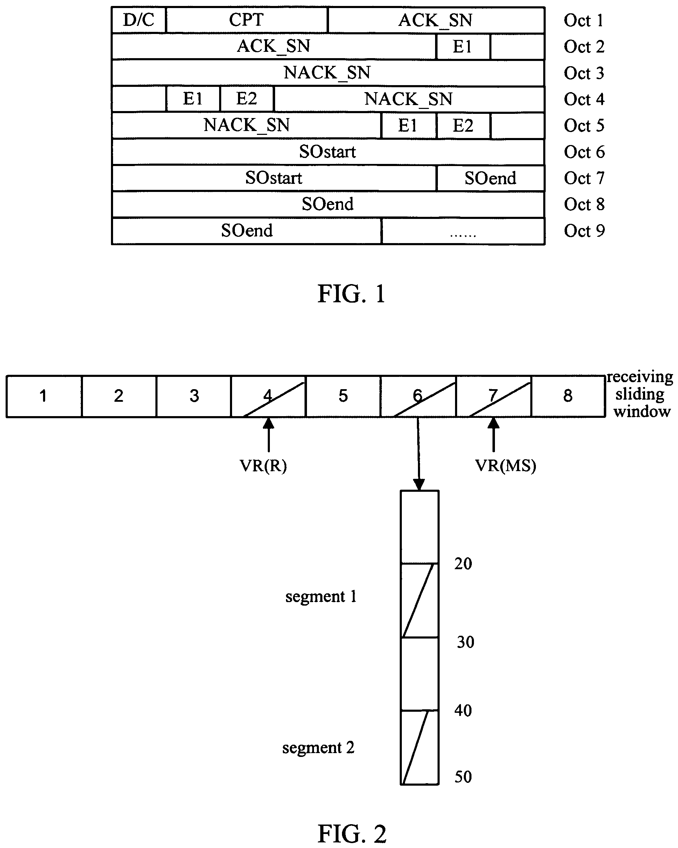

The description for the construction of the status report of the receiving end in Version 850 of 36.322 protocol is as follows: the range of the status report is determined according to the bandwidth, with the starting position being VR (R), and the status report is arranged and constructed according to the ascending order of PDU SN and the ascending order of the segments within the PDU, until to a length allowed by the bandwidth. With regards to the PDU within this range, if any byte segment of this PDU is not received at all, then NACK information constituted by NACK_SN is included in the status report, and the NACK_SN is made to be equal to the SN of the PDU; as for continuous byte segments missing in the PDU that are partially received, the status report includes a group of NACK information constituted by NACK_SN, SOstart, and SOend, the SN of the PDU is used as NACK_SN, and the starting position and ending position of the missing byte segments are used as SOstart and SOend respectively. The format of the status report in the protocol is as shown in FIG. 1, wherein, D/C is an abbreviation of Data/Control field, which is used to indicate whether RLC PDU is a data PDU or a control PDU; CPT is an abbreviation of Control PDU Type field, which is used to indicate the type of the RLC control PDU; E1 is an abbreviation of Extension bit 1 field, which is used to indicate whether a group of NACK_SN, E1 and E2 domains follows behind; E2 is an abbreviation of Extension bit 2 field, which is used to indicate whether a group of SOstart and SOend domains follows behind; Oct is an abbreviation of octet, a byte with eight bits, with the same meaning as Byte.

Regarding the configuration of ACK_SN, consideration will be made in the following two cases:

Case one, when the bandwidth is sufficient, the receiving end configures the status variable VR (MS) to be the ACK_SN of this status report; case two, when the bandwidth is not sufficient, the receiving end configures the SN of the next un-received RLC data PDU to be the ACK_SN. Wherein, RLC data PDU includes PDUs and PDU segments, and the status report does not indicate missing.

There is a special scene in the above description, i.e., the last NACK_SN in the status report constructed by the receiving end may be equal to ACK_SN, for which the following two premises should be met:

Premise one, the bandwidth indicated by the lower layer is not sufficient to packet the missing data within the detection range into a status report for transmission, wherein the detection range refers to: VR(R) <= SN < VR(MS); premise two, two or more than two continuous byte segments are missing in a certain PDU of the receiving end, however, due to limit of the bandwidth, only part of the NACK information can be included in the status report of this time, and the SN of the next missing segment is used as the ACK_SN of the status report.

In this special scene, when the above premises are met, i.e., the bandwidth is not sufficient to transmit a plurality of missing fragments of a PDU, the ACK_SN may be made to be equal to the value of NACK_SN in order to avoid the case where the sending end clears missing fragments caused by the value of the ACK_SN being the next PDU SN.

As shown in FIG. 2, it is supposed that the detection range of the status report of the receiving end is from SN4 to SN7, VR (R)= 4, VR (MS)= 7, wherein SN4 is not received at all, and two continuous segments (SO20-30, SO40-50) in SN6 are not received, and when the status report is constructed according to the ascending order of PDU SN and the ascending order of the segments in the PDU, the limited bandwidth is not sufficient to include all missing information into explicit NACK information of this status report, but only allows to include SN4 as the NACK_SN and segment 1 (S020-30) of SN6 as NACK_SN, SOstart, SOend for transmission after packeting, and the SN of segment 2 (SO40-50) of the next un-received SN6 is configured to be ACk_SN, which equal to 6, since the segment 2 (SO40-50) is the first RLC data PDU that is not included in the status report. Accordingly, the last NACK_SN of the status report = ACK_SN = 6.

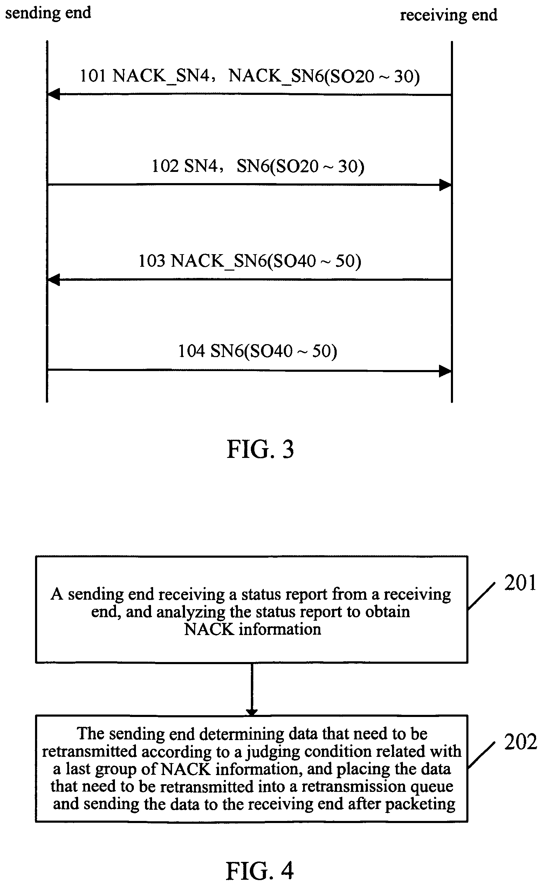

In the prior art, the retransmission mechanism after the sending end receives the status report is as shown in FIG. 3, including the following steps:
Step 101, the receiving end reports a first status report to the sending end, and the sending end receives the first status report; wherein, the NACK information of the first status report includes: NACK_SN4, NACK_SN6 (SO20 - 30).
Step 102, the sending end performs retransmission according to the received NACK information; wherein, the retransmitted information includes: SN4, SN6 (SO20 - 30).

Herein, the sending end will only retransmit all of SN4 and segment 1 (SO20-30) of SN6, and the next missing segment 2 (SO40-50) of the same PDU can only be indicated as missing using NACK information when the second status report is sent.

Step 103, the receiving end reports a second status report to the sending end, and the sending end receives the second status report; wherein, the NACK information in the second status report includes: NACK_SN6 (SO40 - 50).

Step 104, the sending end performs retransmission according to the received NACK information; wherein, the retransmitted information includes: SN6 (SO40 - 50).

Herein, SN6 (SO40 - 50) is precisely the segment 2 of the retransmitted SN6.

In a word, the disadvantage of using the prior art is that: the receiving end will occupy the limited resources of the next status report in order to receive segment 2 by sending one more group of NACK information constituted by NACK_SN, SOstart, Soend, which increases redundant message and causes resource waste of air interface; moreover, the receiving end cannot deliver the received PDUs to the upper layer in time due to missing of segment 2 (SO40-50) of SN6, which may cause delay, or even temporary stagnation of receiving sliding windows in extreme cases. Currently, there is still no efficient solution for the problem of resource waste and delay caused by the sending end retransmitting for multiple times according to the status report reported by the receiving end.

The features of the preamble of the independent claims are known from WO 2008/126808 A1.

### Summary of the Invention

In view of the above, the main purpose of the present invention is to provide a method and an apparatus for rapid retransmission in AM of RLC layer as defined in the independent claims, so as to avoid resource waste and delay.

In order to achieve the above purpose, the technical scheme of the present invention is implemented as follows:

A method for rapid retransmission in a radio link control layer acknowledged mode, comprising the following steps of:
a sending end receiving a status report from a receiving end, and analyzing the received status report to obtain unacknowledged (NACK) information;
the sending end determining data that need to be retransmitted according to a judging condition of a last group of NACK information, and placing the data that need to be retransmitted into a retransmission queue to send to the receiving end after packeting.

Wherein, a type of the data that need to be retransmitted includes: protocol data unit (PDU), or PDU segment.

Wherein, said step of determining data that need to be retransmitted and placing the data that need to be retransmitted into a retransmission queue specifically comprises:
in a case where the sending end judges that the NACK information is the last group of NACK information in the status report, when it is judged that NACK_SN of the last group of NACK information is equal to ACK_SN, determining PDU segments in a PDU corresponding to the NACK_SN of the last group of NACK information starting from SOstart indicated by the last group of NACK information to the end of the PDU as the data that need to be retransmitted and placing the data in the retransmission queue.

Wherein, said step of placing the data that need to be retransmitted into a retransmission queue further comprises: in a case where the sending end judges that the NACK information is not the last group of NACK information in the status report, placing the data that need to be retransmitted indicated by current NACK information into the retransmission queue in turn.

Wherein, said step of sending the data to the receiving end after packeting specifically comprises:
at the sending end, packeting the data that need to be retransmission indicated by the current NACK information, together with the PDU segments starting from SOstart indicated by the last group of NACK information to the end of the PDU in turn, and then sending them to the receiving end.

An apparatus for rapid retransmission in a radio link control layer acknowledged mode, comprising: a status report receiving unit, a status report analyzing unit, a status report judging and determining unit and a data retransmitting unit; wherein,
the status report receiving unit is used to receive a status report from a receiving end;
the status report analyzing unit is used to analyze the received status report to obtain NACK information;
the status report judging and determining unit is used to determine data that need to be retransmitted according to a judging condition of a last group of NACK information;
the data retransmitting unit is used to send retransmission data after packeting in a retransmission queue to the receiving end.

Wherein, the status report judging and determining unit is further used to determine data that need to be retransmitted indicated by current NACK information in turn as the data that need to be retransmitted and place the data into the retransmission queue one by one when it is judged that the NACK information is not the last group of NACK information in the status report.

Wherein, the status report judging and determining unit is further used to, in a case where it is judged that the NACK information is the last group of NACK information in the status report, when it is judged that NACK_SN of the last NACK information is equal to ACK_SN, determine PDU segments in a PDU corresponding to the NACK_SN of the last group of NACK information starting from SOstart indicated by the last group of NACK information to the end of the PDU as the data that need to be retransmitted and place the data into the retransmission queue.

Wherein, the data retransmitting unit is further used to packet the data that need to be retransmission indicated by the current NACK information, together with the PDU segments starting from SOstart indicated by the last group of NACK information to the end of the PDU, and then send them to the receiving end.

In the present invention, a sending end receives a status report from a receiving end, and analyzes the status report to obtain NACK information; the sending end determines data that need to be retransmitted according to a judging condition related to the last group of NACK information, and places the data that need to be retransmitted into a retransmission queue to send to the receiving end after packeting.

With the present invention, the data that need to be retransmitted are determined according to the judging condition related to the last group of NACK information, and are then placed into the retransmission queue for collective transmission after packeting, thereby realizing rapid retransmission in the ARQ retransmission process of the RLC layer protocol entity in a wireless communication field, especially in a LTE system, and hence reducing or avoiding redundant status reports sent by the receiving end. In this way, due to reduction or avoidance of reporting of redundant status reports, the sending end does not need to execute multiple retransmissions as in the prior art when analyzing the status report and performing retransmission processing, thereby avoiding resource waste and delay.

### Brief Description of Drawings

FIG. 1 illustrates the composition of the format of the status report in the current 36.322 protocol;
FIG. 2 illustrates receiving sliding window display of the current AM entity receiving end in a particular scene;
FIG. 3 illustrates the flow for implementing the current retransmission mechanism;
FIG. 4 illustrates the flow for implementing the method of the present invention;
FIG. 5 illustrates the composition structure of the apparatus of the present invention;
FIG. 6 illustrates the flow for implementing an example of the present invention.

### Specific Embodiments

The basic idea of the present invention is: a sending end receives a status report from a receiving end, and analyzes the status report to obtain NACK information; the sending end determines data that need to be retransmitted according to a judging condition of a last group of NACK information, and places the data that need to be retransmitted into a retransmission queue and sending the data to the receiving end after packeting.

The embodiment of the technical scheme will be further described in detail below with reference to the drawings.

The present invention is directed to the retransmission process in AM, and mainly concentrates on the mechanism that after an AM entity receiving end constructs a status report and sends it to an AM entity sending end when bandwidth is not sufficient, the sending end performs retransmission according to the NACK information in the status report. It is especially directed to how to achieve rapid retransmission mechanism in the above particular scene, namely: in a scene where the last NACK_SN in the status report constructed by the receiving end may be equal to ACK_SN. Moreover, the above two premises need to be met when the last NACK_SN is equal to ACK_SN.

As shown in FIG, 4, the method for rapid retransmission in AM of RLC layer, comprising the following steps:
Step 201, a sending end receiving a status report from a receiving end, and analyzing the status report to obtain NACK information;
   Herein, the sending end is a sending end of an AM entity.
Step 202, the sending end determining data that need to be retransmitted according to a judging condition related with a last group of NACK information, and placing the data that need to be retransmitted into a retransmission queue and sending the data to the receiving end after packeting.

Regarding the technical scheme constituted by the above steps 201-202, the type of the data that need to be retransmitted includes: PDU or PDU segment.

In step 202, the specific processing process of determining data that need to be retransmitted according to a judging condition related with a last group of NACK information, and placing the data in a retransmission queue includes two cases, the first one is: when the sending end judges that the NACK information is not the last group of NACK information in the status report, the sending end places the data that need to be retransmitted indicated by the current NACK information into the retransmission queue in turn. Wherein, the NACK information includes NACK_SN. The second case is: the sending end will continue to judge after judging that the NACK information is the last group of NACK information in the status report, and when it judges that NACK_SN of the last NACK information is equal to ACK_SN, the PDU segments in a PDU corresponding to the NACK_SN of the last group of NACK information starting from SOstart indicated in the last group of NACK information to the end of the PDU are determined as the data that need to be retransmitted and placed into the retransmission queue. Wherein, the NACK information includes NACK_SN.

In step 202, the step of sending the data that need to be retransmitted in the retransmission queue to the receiving end after packeting specifically includes: at the sending end, packeting the data that need to be retransmitted indicated by the above current NACK information, together with the PDU segments starting from SOstart indicated by the last group of NACK information to the end of the PDU when the last group of NACK information is processed, and then sending them to the receiving end collectively.

To sum up, with respect to implementation of the method, the contents of the present invention mainly include the following several aspects:
One, the AM entity sending end processes the status report after receiving the status report, judges which PDUs or PDU segments need to be retransmitted according to the NACK information in the status report, and places the data that need to be retransmitted into a retransmission queue.
Two, when processing the last group of NACK_SN, SOstart, SOend information in the status report, the sending end judges whether the NACK_SN is equal to ACK_SN, if it is, then the byte segments starting from SOstart indicated by the last group of NACK information in the PDU corresponding to the SN to the end of the PDU are all placed into the retransmission queue for retransmission; the retransmitted data segments include the SOstart-SOend segments indicated by the last group of NACK information in the status report, which ensures timeliness of PDU retransmission, receiving the missing PDU segments at the receiving end as early as possible, and triggering the update of status variables and delivery of data to the upper layer. Wherein, the byte segment at the end of the PDU may also be called as the PDU segment of the end of the PDU.

In the present invention, implicit NACK information can be read out as much as possible from limited status reports, and the missing segments in the PDU can be retransmitted as early as possible. Compared with the prior art, the present invention reduces transmission of redundant status reports, ensures the timeliness of retransmission, reduces the delay of data transmission, saves limited air interface resources, and improves the timeliness of data retransmission at the sending end and data delivery at the receiving end.

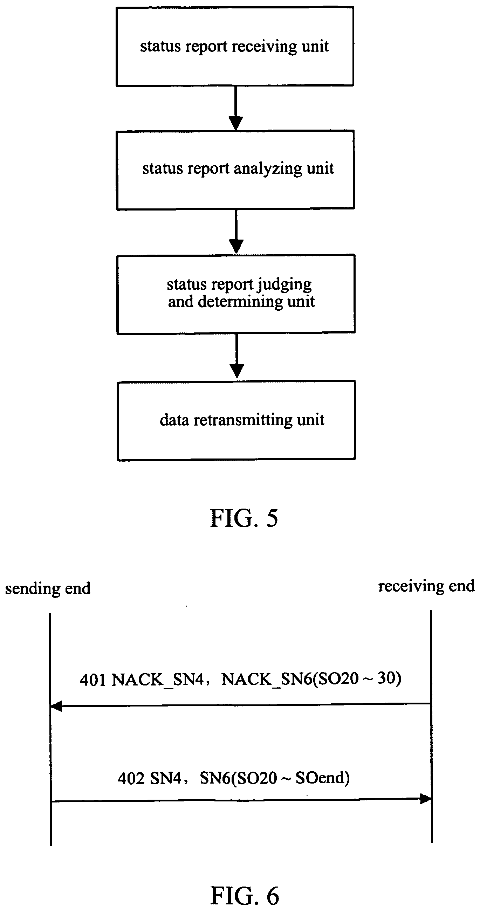

As shown in FIG. 5, it is an apparatus for rapid retransmission in RLC AM, comprising: a status report receiving unit, a status report analyzing unit, a status report judging and determining unit and a data retransmitting unit. Wherein, the status report receiving unit is used to receive a status report from a receiving end, and it can receive status reports from the opposite end continuously. The status report analyzing unit is used to analyze the received status report to obtain NACK information. The status report judging and determining unit is used to determine data that need to be retransmitted according to a judging condition of a last group of NACK information. The data retransmitting unit is used to send retransmission data after packeting in a retransmission queue to the receiving end.

Herein, the status report judging and determining unit has two specific implementations. The first one is: the status report judging and determining unit is further used to place the data that need to be retransmitted indicated by current NACK information one by one into the retransmission queue in turn as the data that need to be retransmitted in a case where it is judged that the NACK information is not the last group of NACK information in the status report. The second one is: the status report judging and determining unit is further used to determine PDU segments in a PDU corresponding to the NACK_SN of the last group of NACK information starting from SOstart indicated by the last group of NACK information to an end of the PDU as the data that need to be retransmitted and place the data into the retransmission queue when it is judged that NACK_SN of the last NACK information is equal to ACK_SN in a case where it is judged that the NACK information is the last group of NACK information in the status report.

Herein, the data retransmitting unit is further used to packet the data that need to be retransmitted indicated by the above current NACK information, together with the PDU segments starting from SOstart indicated in the last group of NACK information to the end of the PDU when the last group of NACK information is processed, and then send them to the receiving end collectively.

In a word, with respect to implementation of the apparatus, the contents of the present invention mainly include the following several aspects:
One, the status report receiving unit in the apparatus is used to receive status report from the opposite end continuously, and send the status reports to the status report analyzing unit.
Two, the status report analyzing unit in the apparatus is used to analyze the contents in the status report, and processes differently according to NACK and ACK information.
Three, the status report judging and determining unit in the apparatus is used to judge whether the NACK information is the last group of information, if not, then it sends the data information indicated as NACK to the data retransmitting unit one by one; if yes, then it continues to judge the relationship between NACK_SN and ACK_SN when processing the last group of NACK information. Wherein, when judging the relationship between NACK_SN and ACK_SN, if they are equal to each other, the byte segments starting from SOstart indicated by the last group of NACK information in the PDU corresponding to the SN to the end of the PDU are all packeted and then sent to the data retransmitting unit; if they are not equal to each other, the data are packeted normally as explicit NACK information and sent to the data retransmitting unit.
Four, the data retransmitting unit is used to manage and buffer the data that need to be retransmitted, waiting for retransmission.

### Apparatus example:

The status report receiving unit is specifically a status report receiver; the status report analyzing unit is specifically a status report analyzer; the status report judging and determining unit is specifically a NACK/ACK judger; the data retransmitting unit is specifically a retransmission processor. Moreover, part of the functions of the status report judging and determining unit are executed in the status report analyzer, that is: the function of judging whether the NACK information is the last group of NACK information is processed by the status report analyzer, and the function of judging the relationship between NACK_SN and ACK_SN in the status report judging and determining unit is processed by the NACK/ACK judger.

### Method example:

The sending end analyzes the contents of the status report upon receiving the status report, and judges which PDUs have been received by the receiving end with acknowledgement and which PDUs or PDU segments need to be retransmitted according to ACK_SN, NACK information, and when processing the last group of NACK, SOstart, SOend, if it is found that NACK_SN=ACK_SN, then the byte segments starting from SOstart indicated by the last group of NACK information in the PDU corresponding to the SN to the end of the PDU are all placed into the retransmission queue for retransmission. When the system architecture of the above apparatus example is adopted, the processing flow of this method example comprises the following steps:
Step 301, according to the detection range of the receiving sliding window and the available bandwidth, the receiving end constructing a status report characterized in that: ACK_SN is 6, the first NACK_SN is 4, the second NACK_SN is 6, SOstart is 20, SOend is 30, and sending the status report to the sending end.
Step 302, the status report receiver of the sending end transmitting the status report to the status report analyzer upon receiving the status report.
Step 303, the status report analyzer analyzing the NACK information in the status report one by one, and for the first NACK information, since there is only NACK_SN, it is known that the PDU is not received at all, then packeting the whole PDU with the SN being 4 and sending it to the retransmission processor.
Step 304, for the last NACK information, the status report analyzer sending it to the NACK/ACKjudger.

Herein, the last NACK information in this method example is the second NACK information.

Step 305, the NACK/ACK judger judging whether the NACK_SN is equal to ACK_SN; in this case, both NACK_SN and ACK_SN are 6, i.e., they are equal, then the segments starting from SOstart of the PDU with SN being 6 to the end of the PDU are packeted for retransmission, and sent to the retransmission processor.

Herein, the segments starting from SOstart to the end of the PDU are precisely: S020-end segments in the PDU with SN being 6.

Step 306, the retransmission processor maintaining and buffering the data that need to be retransmitted, and the sending end packeting segments of SN4 and SN6 (S020-end) in the retransmission processor and sending them to the receiving end.

It can be seen from this mechanism that although the NACK information of this status report does not explicitly indicate that segment 2 (SO40-50) of SN6 is missing, it is defaulted, based on the particular case where the last NACK_SN=ACK_SN, that there are still missing segments after segment 1 (S020-30) of SN6 that need to be retransmitted by the sending end, and since it is unknown which segments specifically are missing, the sending end directly places all segments starting from the SOstart to the end of the PDU into the retransmission queue for retransmission. This method example does not only save the air interface resource of NACK information including segment 2 (SO40-50) in SN6 when the status report is sent for the second time, but also ensures timeliness of data retransmission at the sending end and upward data delivery at the receiving end.

The present invention will be expounded below by comparing it with the prior art. FIG. 3 illustrates the flow for implementing the retransmission mechanism with prior art, and FIG. 6 illustrates the flow for implementing the retransmission mechanism with the present invention, the difference between them is that: in FIG. 3, the receiving end divides the NACK information into two status reports and reports them to the sending end respectively, the sending end analyzes the explicit NACK information in the status reports and then performs retransmission twice; while in FIG. 6, the receiving end only needs to report one status report including NACK information to the sending end, and the sending end not only analyzes explicit NACK information in the status report, but also resolves implicit NACK information from the status report based on the feature that the last NACK_SN is equal to ACK_SN in the above particular scene, and places all the byte segments starting from SOstart indicated by the last group of NACK information in the PDU corresponding to the SN to the end of the PDU into the retransmission queue for retransmission, in which way, the sending end only needs to perform retransmission once. Wherein, explicit NACK information refers to NACK information of which the sending end is explicitly informed by the receiving end, for example: NACK_SN6 (SO20 -30), and NACK_SN6 (SO40 -50); while implicit NACK information refers to NACK information of which the sending end is not explicitly informed by the receiving end, and it is NACK information resolved by the sending end based on the feature that the last NACK_SN is equal to ACK_SN in the above particular scene; if the sending end obtains NACK_SN6 (SO20-30), and finds through analysis that both NACK_SN and ACK_SN are 6, then it is defaulted that the segments (SO20-end) in the PDU with SN being 6 all need to be retransmitted, that is, SN6 (SO30-end) is implicit NACK information. Specifically speaking, the flow shown in FIG. 6 includes the following steps:
Step 401, the receiving end reporting the first status report to the sending end, and the sending end receiving the first status report; wherein the NACK information in the first status report includes: NACK_SN4, NACK_SN6 (SO20 - 30).
Step 402, the sending end judging the data that need to be retransmitted according to the resolved NACK information in turn, and placing the data that need to be retransmitted into a retransmission queue and sending them to the receiving end after packeting; wherein, the packeted data to be retransmitted include: SN4, SN6 (SO20 - end).

Herein, the status report involved above is indicated with Status Report; segment is indicated with Segment; SN is an abbreviation of Sequence Number, referring to a sequence number; ACK_SN is an abbreviation of Acknowledgement Sequence Number, referring to a sequence number of acknowledged reception; NACK_SN is an abbreviation of Negative Acknowledgement Sequence Number, referring to a sequence number of acknowledged un-reception; SOstart is an abbreviation of Segment Offset Start, referring to the starting position of segment offset; SOend is an abbreviation of Segment Offset End, referring to the ending position of segment offset.

The above examples are only preferred examples of the present invention, and are not intended to limit the protection scope of the present invention.

## Claims

1. A method for rapid retransmission in a 3GPP LTE radio link control layer acknowledged mode, comprising following steps of:
a sending end receiving (201, 401) a status report from a receiving end, and analyzing (201) the received status report to obtain unacknowledged, NACK, information;
the sending end determining (202) data that need to be retransmitted according to a judging condition of a last group of NACK information, and placing (202) the data that need to be retransmitted into a retransmission queue and sending (202, 402) the data to the receiving end after packeting,
wherein the data that need to be retransmitted includes: protocol data unit, PDU, or PDU segment;
**characterized in that**
said step of determining data that need to be retransmitted and placing the data that need to be retransmitted into a retransmission queue specifically comprises:
in a case where the sending end judges that the NACK information is the last group of NACK information in the status report, when it is judged that NACK_SN of the last NACK information is equal to ACK_SN, determining PDU segments in a PDU corresponding to the NACK_SN of the last group of NACK information starting from SOstart indicated by the last group of NACK information to an end of the PDU as the data that need to be retransmitted and placing the data into the retransmission queue.

2. The method according to claim 1, wherein said step of placing the data that need to be retransmitted into a retransmission queue further comprises: in a case where the sending end judges that the NACK information is not the last group of NACK information in the status report, placing in turn the data that need to be retransmitted indicated by the NACK information which is not the last group of NACK information in the status report into the retransmission queue one by one.

3. The method according to claim 2, wherein said step of sending the data to the receiving end after packeting specifically comprises:
at the sending end, packeting in turn the data that need to be retransmitted indicated by the NACK information which is not the last group of NACK information in the status report, together with the PDU segments starting from SOstart indicated by the last group of NACK information to the end of the PDU to send to the receiving end after packeting.

4. An apparatus for rapid retransmission in a 3GPP LTE radio link control layer acknowledged mode, comprising: a status report receiving unit, a status report analyzing unit, a status report judging and determining unit and a data retransmitting unit; wherein
the status report receiving unit is adapted to receive status reports from a receiving end;
the status report analyzing unit is adapted to analyze the received status reports to obtain NACK information;
the status report judging and determining unit is adapted to determine data that need to be retransmitted according to a judging condition of a last group of NACK information, and to place the data that need to be retransmitted into a retransmission queue, wherein the data that need to be retransmitted includes: protocol data unit, PDU, or PDU segment;
the data retransmitting unit is adapted to send retransmission data in the retransmission queue to the receiving end after packeting;
**characterized in that**
the status report judging and determining unit is further adapted to, in a case where it is judged that the NACK information is the last group of NACK information in the status report, when it is judged that NACK_SN of the last NACK information is equal to ACK_SN, determine PDU segments in a PDU corresponding to the NACK_SN of the last group of NACK information starting from SOstart indicated by the last group of NACK information to an end of the PDU as the data that need to be retransmitted and place the data into the retransmission queue.

5. The apparatus according to claim 4, wherein the status report judging and determining unit is further adapted to determine data that need to be retransmitted indicated by the NACK information which is not the last group of NACK information in the status report as the data that need to be retransmitted and place in turn the data into the retransmission queue one by one when it is judged that the NACK information is not the last group of NACK information in the status report.

6. The apparatus according to claim 5, wherein the data retransmitting unit is further adapted to packet in turn the data that need to be retransmitted indicated by the NACK information which is not the last group of NACK information in the status report, together with the PDU segments starting from SOstart indicated by the last group of NACK information to the end of the PDU to send to the receiving end after packeting.

## Patentansprüche

1. Verfahren zur schnellen Neuübertragung in einem 3GPP-LTE-Funkverbindungs-Steuerungsschicht-Quittierungsmodus, das die folgenden Schritte umfasst, dass:
eine Sendeseite einen Statusbericht von einer Empfangsseite empfängt (201, 401) und den empfangenen Statusbericht analysiert (201), um nicht quittierte Informationen, NACK-Informationen, zu erhalten;
die Sendeseite Daten ermittelt (202), die in Übereinstimmung mit einer Beurteilungsbedingung einer letzten Gruppe von NACK-Informationen erneut übertragen werden müssen, und die Daten, die erneut übertragen werden müssen, in eine Neuübertragungs-Warteschlange stellt (202) und die Daten nach dem Verpacken an die Empfangsseite sendet (202, 402),
wobei die Daten, die erneut übertragen werden müssen, umfassen: eine Protokolldateneinheit PDU oder ein PDU-Segment;
**dadurch gekennzeichnet, dass**
der Schritt des Ermittelns von Daten, die erneut übertragen werden müssen, und des Stellens der Daten, die erneut übertragen werden müssen, in eine Neuübertragungs-Warteschlange speziell umfasst, dass:
in einem Fall, in dem die Sendeseite beurteilt, dass die NACK-Informationen die letzte Gruppe von NACK-Informationen im Statusbericht sind, wenn beurteilt wird, dass eine NACK_SN der letzten NACK-Informationen gleich einer ACK_SN ist, PDU-Segmente in einer PDU, die der NACK_SN der letzten Gruppe von NACK-Informationen entspricht, welche von einem SOstart aus starten, der durch die letzte Gruppe von NACK-Informationen angezeigt wird, bis zu einem Ende der PDU, als die Daten bestimmt werden, die erneut übertragen werden müssen, und die Daten in die Neuübertragungs-Warteschlange gestellt werden.

2. Verfahren nach Anspruch 1,
wobei der Schritt des Stellens der Daten, die erneut übertragen werden müssen, in eine Neuübertragungs-Warteschlange ferner umfasst, dass: in einem Fall, in dem die Sendeseite beurteilt, dass die NACK-Informationen nicht die letzte Gruppe von NACK-Informationen in dem Statusbericht sind, wiederum die Daten, die erneut übertragen werden müssen, welche durch die NACK-Informationen angezeigt sind, die nicht die letzte Gruppe von NACK-Informationen in dem Statusbericht sind, nacheinander in die Neuübertragungs-Warteschlange gestellt werden.

3. Verfahren nach Anspruch 2,
wobei der Schritt des Sendens der Daten nach dem Verpacken an die Empfangsseite speziell umfasst, dass:
an der Sendeseite wiederum die Daten, die erneut übertragen werden müssen, welche durch die NACK-Informationen angezeigt werden, welche nicht die letzte Gruppe von NACK-Informationen in dem Statusbericht sind, zusammen mit den PDU-Segmenten, die bei SOstart starten, der durch die letzte Gruppe von NACK-Informationen angezeigt wird, bis zu dem Ende der PDU verpackt werden, um sie nach dem Verpacken an die Empfangsseite zu senden.

4. Vorrichtung zur schnellen Neuübertragung in einem 3GPP-LTE-Funkverbindungs-Steuerungsschicht-Quittierungsmodus, umfassend: eine Statusberichtempfangseinheit, eine Statusberichtanalyseeinheit, eine Statusbericht-Beurteilungs- und -Bestimmungseinheit und eine Datenneuübertragungseinheit; wobei
die Statusberichtempfangseinheit geeignet ist, um Statusberichte von einer Empfangsseite zu empfangen;
die Statusberichtanalyseeinheit geeignet ist, um die empfangenen Statusberichte zu analysieren, um NACK-Informationen zu erhalten;
die Statusbericht-Beurteilungs- und -Bestimmungseinheit geeignet ist, um Daten zu ermitteln, die in Übereinstimmung mit einer Beurteilungsbedingung von einer letzten Gruppe von NACK-Informationen erneut übertragen werden müssen, und um die Daten, die erneut übertragen werden müssen, in eine Neuübertragungs-Warteschlange zu stellen, wobei die Daten, die erneut übertragen werden müssen, umfassen: eine Protokolldateneinheit PDU oder ein PDU-Segment;
wobei die Datenneuübertragungseinheit geeignet ist, um Neuübertragungsdaten in der Neuübertragungs-Warteschlange nach dem Verpacken an die Empfangsseite zu senden;
**dadurch gekennzeichnet, dass**
die Statusbericht-Beurteilungs- und -Bestimmungseinheit ferner geeignet ist, um in einem Fall, in dem beurteilt wird, dass die NACK-Informationen die letzte Gruppe von NACK-Informationen in dem Statusbericht sind, wenn beurteilt wird, dass eine NACK_SN der letzten NACK-Informationen gleich einer ACK_SN ist, PDU-Segmente in einer PDU, die der NACK_SN der letzten Gruppe von NACK-Informationen entspricht, die von einem SOstart aus starten, der durch die letzte Gruppe von NACK-Informationen angezeigt wird, bis zu einem Ende der PDU, als die Daten zu bestimmen, die erneut übertragen werden müssen, und die Daten in die Neuübertragungs-Warteschlange zu stellen.

5. Vorrichtung nach Anspruch 4,
wobei die Statusbericht-Beurteilungs- und -Bestimmungseinheit ferner geeignet ist, um Daten, die erneut übertragen werden müssen, welche durch die NACK-Informationen angezeigt sind, die nicht die letzte Gruppe von NACK-Informationen in dem Statusbericht sind, als die Daten zu bestimmen, die erneut übertragen werden müssen, und um wiederum die Daten nacheinander in die Neuübertragungs-Warteschlange zu stellen, wenn beurteilt wird, dass die NACK-Informationen nicht die letzte Gruppe von NACK-Informationen im Statusbericht sind.

6. Vorrichtung nach Anspruch 5,
wobei die Datenneuübertragungseinheit ferner geeignet ist, um wiederum die Daten, die erneut übertragen werden müssen, welche durch die NACK-Informationen angezeigt sind, die nicht die letzte Gruppe von NACK-Informationen im Statusbericht sind, zusammen mit den PDU-Segmenten, die bei SOstart starten, der durch die letzte Gruppe von NACK-Informationen angezeigt werden, bis zu dem Ende der PDU zu verpacken, um sie nach dem Verpacken an die Empfangsseite zu senden.

## Revendications

1. Procédé de retransmission rapide dans un mode d'accusé de réception de couche de commande de liaison radio 3GPP LTE, comprenant les étapes suivantes qui consistent :
à recevoir (201, 401), par le bais d'une extrémité d'envoi, un rapport d'état à partir d'une extrémité de réception, et à analyser (201), par le bais de l'extrémité d'envoi, le rapport d'état reçu pour obtenir des informations sans accusé de réception, NACK ;
à déterminer (202), par le biais de l'extrémité d'envoi, des données qui doivent être retransmises selon une condition de jugement d'un dernier groupe d'informations NACK, et à placer (202), par le biais de l'extrémité d'envoi, les données qui doivent être retransmises dans une file d'attente de retransmission et à envoyer (202, 402), par le biais de l'extrémité d'envoi, les données à l'extrémité de réception après la mise en paquets,
dans lequel les données qui doivent être retransmises comportent : une unité de données de protocole, PDU, ou un segment PDU ;
**caractérisé en ce que** :
ladite étape de détermination des données qui doivent être retransmises et de mise en place des données qui doivent être retransmises dans une file d'attente de retransmission comprend spécifiquement le fait :
dans le cas où l'extrémité d'envoi juge que les informations NACK représentent le dernier groupe d'informations NACK dans le rapport d'état, lorsqu'il est jugé qu'un NACK_SN des dernières informations NACK est égal à un ACK_SN, de déterminer des segments PDU dans une PDU correspondant au NACK_SN du dernier groupe d'informations NACK en commençant par SOstart indiqué par le dernier groupe d'informations NACK jusqu'à une extrémité de la PDU comme étant les données qui doivent être retransmises et de placer les données dans la file d'attente de retransmission.

2. Procédé selon la revendication 1, dans lequel ladite étape de mise en place des données qui doivent être retransmises dans une file d'attente de retransmission comprend en outre le fait : dans un cas où l'extrémité d'envoi juge que les informations NACK ne représentent pas le dernier groupe d'informations NACK dans le rapport d'état, de placer à tour de rôle les données qui doivent être retransmises indiquées par les informations NACK qui ne représentent pas le dernier groupe d'informations NACK dans le rapport d'état dans la file d'attente de retransmission une par une.

3. Procédé selon la revendication 2, dans lequel ladite étape d'envoi des données à l'extrémité de réception après la mise en paquets comprend spécifiquement le fait :
au niveau de l'extrémité d'envoi, de mettre en paquets à tour de rôle les données qui doivent être retransmises indiquées par les informations NACK qui ne représentent pas le dernier groupe d'informations NACK dans le rapport d'état, conjointement avec les segments PDU en commençant par SOstart indiqué par le dernier groupe d'informations NACK jusqu'à l'extrémité de la PDU pour l'envoi à l'extrémité de réception après la mise en paquets.

4. Appareil de retransmission rapide dans un mode d'accusé de réception de couche de commande de liaison radio 3GPP LTE, comprenant : une unité de réception de rapport d'état, une unité d'analyse de rapport d'état, une unité de jugement et de détermination de rapport d'état et une unité de retransmission de données ; dans lequel :
l'unité de réception de rapport d'état est adaptée pour recevoir des rapports d'état à partir d'une extrémité de réception ;
l'unité d'analyse de rapport de situation est adaptée pour analyser les rapports d'état reçus pour obtenir des informations NACK ;
l'unité de jugement et de détermination de rapport d'état est adaptée pour déterminer des données qui doivent être retransmises selon une condition de jugement d'un dernier groupe d'informations NACK, et pour placer les données qui doivent être retransmises dans une file d'attente de retransmission, où les données qui doivent être retransmises comportent : une unité de données de protocole, PDU, ou un segment PDU ;
l'unité de retransmission de données est adaptée pour envoyer des données de retransmission dans la file d'attente de retransmission à l'extrémité de réception après la mise en paquets ;
**caractérisé en ce que** :
l'unité de jugement et de détermination de rapport d'état est en outre adaptée, dans un cas où il est jugé que les informations NACK représentent le dernier groupe d'informations NACK dans le rapport d'état, lorsqu'il est jugé qu'un NACK_SN des dernière informations NACK est égal à un ACK_SN, pour déterminer des segments PDU dans une PDU correspondant au NACK_SN du dernier groupe d'informations NACK en commençant par SOstart indiqué par le dernier groupe d'informations NACK jusqu'à une extrémité de la PDU comme étant les données qui doivent être retransmises et pour placer les données dans la file d'attente de retransmission.

5. Appareil selon la revendication 4, dans lequel l'unité de jugement et de détermination de rapport d'état est en outre adaptée pour déterminer des données qui doivent être retransmises indiquées par les informations NACK qui ne représentent pas le dernier groupe d'informations NACK dans le rapport d'état comme étant les données qui doivent être retransmises et pour placer à tour de rôle les données dans la file d'attente de retransmission une par une lorsqu'il est jugé que les informations NACK ne représentent pas le dernier groupe d'informations NACK dans le rapport d'état.

6. Appareil selon la revendication 5, dans lequel l'unité de retransmission de données est en outre adaptée pour mettre en paquets à tour de rôle les données qui doivent être retransmises indiquées par les informations NACK qui ne représentent pas le dernier groupe d'informations NACK dans le rapport d'état, conjointement avec les segments PDU en commençant par SOstart indiqué par le dernier groupe d'informations NACK jusqu'à l'extrémité de la PDU pour l'envoi à l'extrémité de réception après la mise en paquets.
